# EUROPÄISCHE PATENTANMELDUNG

(11) **EP 0 894 949 A2**
(43) Veröffentlichungstag der Anmeldung: **03.02.1999**
(21) Anmeldenummer: 98890199.7
(22) Anmeldetag: 07.07.1998
(51) Int. Cl.: F01N 1/00, F01N 3/28

(54) **Einsatz für Schalldämpfer oder Katalysatoren**

(30) Priorität: 10.07.1997 AT 1189/97
(71) Anmelder: Reineke, Horst, 9470 St. Paul/Lavanttal (AT)
(72) Erfinder: Reineke, Horst, 9470 St. Paul/Lavanttal (AT)
(74) Vertreter: Beer, Manfred, Dipl.-Ing.

(57) **Zusammenfassung**

Ein Einsatz für Schalldämpfer oder Katalysatoren, insbesondere für Auspufftöpfe oder Katalysatoren für Verbrennungsmotoren, besteht aus einem mit Querwellungen versehenen Streifen (1) aus Blech in schraubenförmiger Anordnung. Der Streifen (1) ist z.B. durch Schweißungen (7) od.dgl. bereichsweise mit sich selbst entlang quer zu seiner Längserstreckung verlaufender Linien verbunden. Durch Auseinanderziehen in Richtung der Achse des Einsatzes erhält der Einsatz eine wabenartige Struktur. Bevorzugt ist es, daß durch die Schweißungen (7) Wellenberge (10) einer Windung Streifens (1) mit Wellentälern (11) einer benachbarten Windung und Wellentäler (11) mit Wellenbergen (10) einer benachbarten Windung des Streifens (1) verbunden sind. In diesem Fall ist die Größe der Querwellungen des Streifens (1) so gewählt, daß Wellenberge (10) und Wellentäler (11) in benachbarten Windungen des Streifens (1) einander gegenüberliegend angeordnet verbunden sind.

## Beschreibung

Die Erfindung betrifft einen Einsatz für Schalldämpfer oder Katalysatoren mit den Merkmalen des einleitenden Teils des Anspruchs 1.

Bekannte Schalldämpfer besitzen in einem Gehäuse (Auspufftopf) untergebracht, verschiedene Einbauten wie Blenden, Lamellen u. dgl. um Auspuffgeräusche zu dämpfen. Ähnliches gilt für Katalysatoren wie sie für Kraftfahrzeuge mit Verbrennungsmotoren verwendet werden.

Aus der US 4 683 978 A ist ein Schalldämpfer bekannt, der in einem zylinderförmigen Gehäuse ein zu diesem koaxial angeordnetes Rohr aufweist. Zwischen dem Rohr und der Wand des Gehäuses ist ein schraubenlinienförmig verlaufender, mit Querwellungen, also Wellungen die sich im wesentlichen radial erstrecken, versehener Blechstreifen angeordnet, so daß ein schraubenlinienförmiger Durchgang entsteht.

Eine ähnliche Konstruktion ist aus der US 3 393 767 A bekannt, die einen Schalldämpfer offenbart, der in einem Gehäuse einen schraubenlinienförmig angeordneten, mit Querwellungen versehenen Blechstreifen als Einsatz enthält.

Sowohl bei der US 4 683 978 A als auch bei der US 3 393 767 A sind die Querwellungen lediglich im Bereich des inneren Randes des Blechstreifens ausgeprägt und enden vor dem Außenrand des schraubenlinienförmigen Blechstreifens, so daß dieser Außenrand glatt ausgebildet ist, also keine Querwellungen aufweist.

Nachteilig bei den bekannten Einsätzen ist es, daß der schraubenlinienförmig angeordnete Blechstreifen ein äußerst labiles Gebilde ist, das erst durch das Mittelrohr und/oder das Gehäuse des Schalldämpfers oder Katalysators gestützt wird.

Die FR 1 318 299 A zeigt einen Einsatz für Schalldämpfer gemäß dem einleitenden Teil des Anspruches 1, bei dem aufeinanderfolgende Windungen des wendelförmigen, mit Querwellungen versehenen Blechstreifens miteinander nicht verbunden, sondern im Abstand voneinander angeordnet sind.

Die GB 694 376 A zeigt einen Schalldämpfer, in dem ein um eine längslaufende Achse verdrehter, mit Wellungen versehener Blechstreifen als Einsatz vorgesehen ist. Abgesehen davon, daß der Blechstreifen bei der GB 694 376 A nicht wendelförmig ist, sind aufeinanderfolgende Abschnitte des in sich verdrehten Blechstreifens des Einsatzes gemäß der GB 694 376 A nicht miteinander verbunden.

Die DE 33 19 529 A1 zeigt in ihren Figuren 9a bis c eine ähnliche Anordnung wie die zuvor diskutierte GB 694 376 A, nämlich einen Streifen aus gestrecktem Material mit einheitlicher Breite, der in sich (in der DE 33 19 529 A1 unrichtig: zu einer Spirale) verdreht ist. Bei dieser Ausführungsform ist der gesamte Innenraum des Katalysators durch den in sich verdrehten Streifen aus gestrecktem Material ausgefüllt, wobei, so wie bei dem Einsatz der GB 694 376 A, lediglich ein schraubenförmiger Durchgang vorliegt. So wie bei der GB 694 736 A sind bei der DE 33 19 529 A1 aufeinanderfolgende Windungen des verdrehten Streifens miteinander nicht verbunden.

Die US 3 088 271 A betrifft einen Nachbrenner mit einem Einsatz, der aus aufeinandergestapelten, gewellten Scheiben gebildet ist, wobei die Wellungen in aufeinanderfolgenden Scheiben senkrecht zueinander stehen, wie dies die Fig. 1 und 2 der US 3 088 271 A zeigen. Bei der Konstruktion des Einsatzes für einen Nachbrenner (Auspufftopf) der US 3 088 271 A sind die aufeinandergepackten, gewellten Scheiben nicht miteinander verbunden, sondern werden durch eine zusätzlich angeordnete Spannschraube zwischen Endplatten zusammengehalten.

Der Erfindung liegt die Aufgabe zu Grunde einen an weitestgehend beliebige Schalldämpfergehäuse (Auspufftöpfe) oder Gehäuse für Katalysatoren anpaßbaren Einsatz zur Verfügung zu stellen, der schon vor dem Einbau in den Schalldämpfer oder Katalysator ein in sich stabiles Gebilde ist.

Erfindungsgemäß wird dies mit den Merkmalen des Anspruches 1 erreicht.

Bevorzugte und vorteilhafte Ausführungsformen des erfindungs-gemäßen Einsatzes für Schalldämpfer oder Katalysatoren sind Gegenstand der Unteransprüche.

Vorteile des erfindungsgemäßen Einsatzes und seiner Ausführungsformen sind beispielsweise die folgenden:

Zunächst kann der Einsatz als Metallwabenrundkörper aus einem Stück (Metallstreifen) mit (Elektronen-)Schweißung oder anderen geeigneten Verbindungsverfahren hergestellt werden.

Der erfindungsgemäße, als Metallwabenkörper ausgebildete Einsatz kann durch entsprechende Wahl der Größe der Waben (Abstand der Schweißungen voneinander) an den jeweils gewünschten Gasdruck angepaßt werden.

Da der erfindungsgemäße Einsatz aus einem Blechstreifen besteht, sind die für die üblichen Lamellenschalldämpfer oder Katalysatoren erforderlichen Stanzvorgänge, die Abfall bedingen, entbehrlich.

Der erfindungsgemäße Einsatz ist eine sich selbst tragende und sich selbst stabilisierende Konstruktion .

Der erfindungsgemäße Einsatz kann in beliebiger Länge hergestellt und durch Abtrennen des jeweils benötigten Abschnittes auf die benötigte Länge zugeschnitten werden.

Weitere Einzelheiten und Merkmale der Erfindung ergeben sich aus der nachstehenden Beschreibung von Ausführungsbeispielen der Erfindung, die auf die angeschlossenen Zeichnungen Bezug nimmt. Es zeigt Fig. 1 schematisch eine Arbeitsweise beim Herstellen eines erfindungsgemäßen Einsatzes, Fig. 2 eine Möglichkeit des schrittweisen Weiterdrehens des schraubenförmig angeordneten Streifens und Fig. 3 in Seitenansicht, einen erfindungsgemäßen Einsatz.

Der erfindungsgemäße Einsatz für Schalldämpfer oder Katalysatoren kann aus einem Streifen 1 aus einem für Einsätze in Schalldämfern oder Katalysatoren üblichen Werkstoff bestehen.

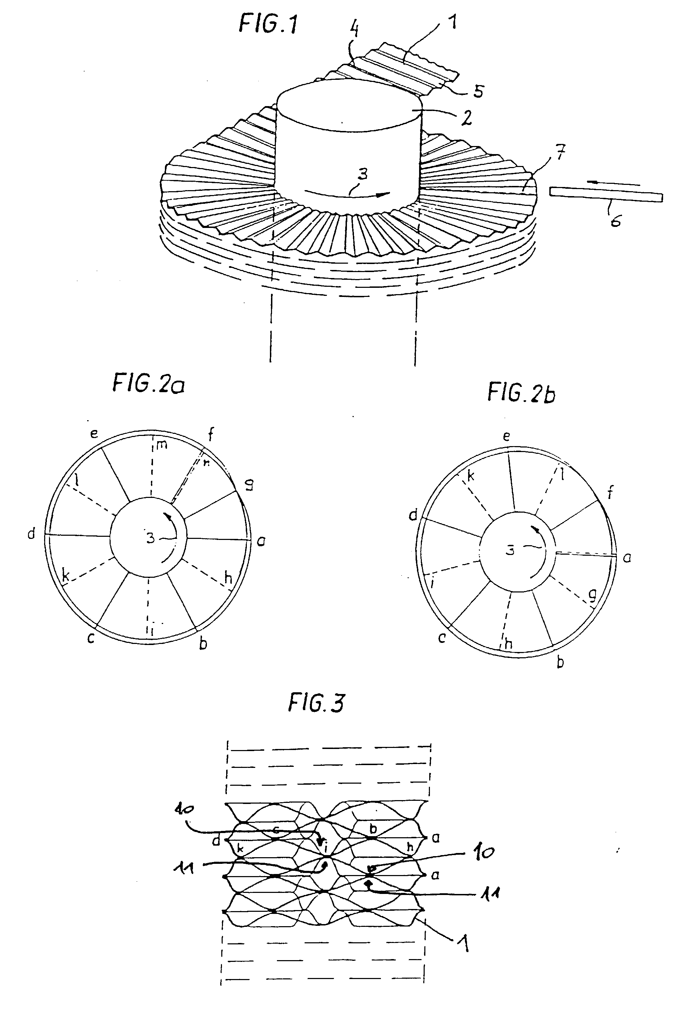

Durch die Wahl der Breite und die Form der Längsseitenränder des gewellten (Blech-)Streifens 1 und der Form (kreiszylindrisch oder prismatisch) sowie durch die Größe des Wickelkerns 2 kann man die Größe und Außenkontur des erfindungsgemäß hergestellten Einsatzes (Fig. 3) der Form des Gehäuses und dessen Abmessungen anpassen.

Der erfindungsgemäße Einsatz für Schalldämpfer oder Katalysatoren kann also in jeder gewünschten Form, Größe und Länge hergestellt werden.

In Fig. 1 ist gezeigt, daß der Einsatz für Schalldämpfer oder Katalysatoren dadurch hergestellt werden kann, daß ein (Metall-)Streifen 1, der zwischen seinen Rändern 4, 5 durchgehend Querwellungen aufweist um einen Wickeldorn 2 herumgewickelt wird, wobei die Lagen des Metallstreifens 1 in radialen Bereichen 7 mit Hilfe eines schematisch angeordneten Werkzeuges miteinander verbunden z.B. verschweißt werden. So wird ein Gebilde erhalten, in dem aufeinanderliegende Windungen des Blechstreifens 1 bereichsweise miteinander verbunden sind, so daß sich das so hergestellte Gebilde unter Bildung einer wabenartigen Struktur achsial auseinanderziehen läßt (siehe Fig. 3). Beispielsweise ist es möglich, den Wickeldorn 2 Richtung des Pfeiles 3 von Fig. 1 und 2 schrittweise derart weiterzudrehen, so daß (siehe Fig. 2) ausgehend von der ersten Verbindung ab Bereich a gleich große Drehschritte ausgeführt werden.

Bei dem in Fig. 2 dargestellten Beispiel ist die Größe der Drehschritte so gewählt, daß der letzte Teilschritt (Schritt e nach f) eine halbe Schrittgröße von der Ausgangsposition a liegt. Bei dieser Variante sind die bei der Ausführung der Drehschritte von f nach g, h, i, k und 1 erzeugten (Schweiß-) Verbindungen 7 daher gegenüber den bei den Drehschritten von a nach b, c, d, e und f ausgeführten (Schweiß-) Verbindungen 7 jeweils um eine halbe Schrittgröße versetzt. Der wie beschrieben hergestellte Einsatz für einen Schalldämpfer oder einen Katalysator, der aus einem einzigen (Blech)Streifen 1 besteht, ist schematisiert, in Fig. 3 in zu einer wabenartigen Struktur auseinandergezogener Lage gezeigt. Dabei ist der Übersichtlichkeit wegen die Lage der (Schweiß-) Verbindungen, die jeweils am Ende der Schritte in Fig. 2 mit a, b usw. bezeichnet sind, eingetragen.

Der beschriebene Einsatz für Schalldämpfer oder Katalysatoren kann ausgehend von der zunächst erhaltenen Kontur mit zylindermantelförmiger Außenfläche durch radiales Zusammendrücken zu einer anderen, z.B. einer ovalen oder prismatischen Querschnittsform umgeformt werden. Zusätzlich kann durch die Wahl der Breite und der Form der Längsseitenränder des gewellten (Blech-)Streifens 1 und durch die Form sowie Größe des Wickeldornes 2 die Größe und die Außenkontur des erfindungsgemäßen Einsatzes bestimmt werden.

Es ist noch darauf hinzuweisen, daß wie auch die Fig. 3 zeigt, bei dem erfindungsgemäßen Einsatz bevorzugt ist, daß die Wellungen des (Blech-)Streifens 1 hinsichtlich ihrer Größe so gewählt sind, daß im fertigen Einsatz Wellentäler 10 einer Windung mit Wellenbergen 11 in der jeweils benachbarten Windung des (Blech-)Streifens 1 verbunden sind. Weiters können Wellenberge 11 einer Windung mit Wellentälern 10 in der jeweils benachbarten Windung des (Blech-)Streifens 1 verbunden sein.

Der (Blech-)Streifen 1, aus dem der erfindungsgemäße Einsatz besteht, kann gelocht oder perforiert sein, um seinen Strö-mungswiderstand (Gasdruck) auf den jeweils vorteilhaften Wert einzustellen.

Es ist auch denkbar, daß einer oder beide Längsränder 4, 5 des (Blech-)Streifens 1, vorzugsweise der im gewickelten Zustand außen liegende Rand 4, gewellt oder gezackt ist, so daß der Einsatz am Gehäuse des Schalldämpfers oder Katalysators nur im wesentlichen punktförmig anliegt.

Zusammenfassend kann ein Ausführungsbeispiel der Erfindung wie folgt dargestellt werden:

Ein Einsatz für Schalldämpfer oder Katalysatoren, insbesondere für Auspufftöpfe oder Katalysatoren für Verbrennungsmotoren, besteht aus einem mit Querwellungen versehenen Streifen 1 aus Blech in schraubenförmiger Anordnung. Der Streifen 1 ist z.B. durch Schweißungen 7 od.dgl. bereichsweise mit sich selbst entlang quer zu seiner Längserstreckung verlaufender Linien verbunden. Durch Auseinanderziehen in Richtung der Achse des Einsatzes erhält der Einsatz eine wabenartige Struktur. Bevorzugt ist es, daß durch die Schweißungen 7 Wellenberge 10 einer Windung Streifens 1 mit Wellentälern 11 einer benachbarten Windung und Wellentäler 11 mit Wellenbergen 10 einer benachbarten Windung des Streifens 1 verbunden sind. In diesem Fall ist die Größe der Querwellungen des Streifens 1 so gewählt, daß Wellenberge 10 und Wellentäler 11 in benachbarten Windungen des Streifens 1 einander gegenüberliegend angeordnet verbunden sind.

## Patentansprüche

1. Einsatz für Schalldämpfer oder Katalysatoren, insbesondere für Auspufftöpfe oder Katalysatoren für Verbrennungsmotoren, bestehend aus einem wendelförmigen Streifen (1), wobei der Streifen (1) Querwellungen aufweist, und wobei der innen liegende Rand (5) des Streifens (1) im Abstand von der Achse des Einsatzes angeordnet ist, dadurch gekennzeichnet, daß aufeinanderfolgende Windungen des Streifens (1) längs in Normalebenen auf die Achse des Einsatzes verlaufender Linien (7) miteinander verbunden sind.

2. Einsatz nach Anspruch 1, dadurch gekennzeichnet, daß Wellentäler (10) einer Windung des Streifens (1) mit Wellenbergen (11) einer benachbarten Windung des Streifens (1) verbunden sind.

3. Einsatz nach Anspruch 1 oder 2, dadurch gekennzeichnet, daß Wellenberge (11) einer Windung des Streifens (1) mit Wellentälern (10) einer benachbarten Windung des Streifens (1) verbunden sind.

4. Einsatz nach einem der Ansprüche 1 bis 3, dadurch gekennzeichnet, daß aufeinanderfolgende Windungen des Streifens (1) miteinander durch Schweißungen (7) verbunden sind.

5. Einsatz nach einem der Ansprüche 1 bis 4, dadurch gekennzeichnet, daß der Streifen (1), wenigstens bereichsweise gelocht oder perforiert ist.

6. Einsatz nach einem der Ansprüche 1 bis 5, dadurch gekennzeichnet, daß wenigstens der äußere Rand (4) des Streifens (1) gewellt oder gezackt ist.
